# EUROPEAN PATENT APPLICATION

(11) **EP 4 831 051 A1**
(43) Date of publication of application: **28.10.2026**
(21) Application number: 25211295.8
(22) Date of filing: 27.10.2025
(51) Int. Cl.: B62J 9/25, B62J 9/24, B62J 9/27, B62J 9/30, B62J 35/00

(54) **QUICK-RELEASE DEVICE FOR MOTORCYCLE TANK BAG**

(30) Priority: 27.04.2025 CN 202510543845
(71) Applicant: Hangzhou Xibu Technology Co., Ltd., Hangzhou Zhejiang (CN)
(72) Inventor: YU, Changwei, Hangzhou (CN)
(74) Representative: Vitina, Maruta

(57) **Abstract**

A quick-release device for motorcycle tank bags includes a quick-release main body (1) including a housing (4) and a latch assembly, a base plate (2) and a tank cap mounting unit (3). The tank cap mounting unit is embedded in a bottom groove (4.3) of the housing. A side of the groove is provided with multiple through holes (4.5). An active latch plate (5) and a driven latch plate (6) are configured to engage with a synchronization gear (7) via racks (5.4). Dual latch plates are configured to move synchronously in opposite directions through an external actuating lever (9.2). The actuating lever is pressed to drive a rotation shaft (9.1) and an internal pivot arm (9.3) to retract the fastening heads (5.3), thereby achieving the unlocking. After releasing the actuating lever, the latch plates are reset via a first return spring (8), and the fastening heads pass through the through holes to engage with the fastening hole, thereby achieving the locking.

## Description

### TECHNICAL FIELD

This application relates to motorcycle accessories, and more particularly to a quick-release device for a motorcycle tank bag.

### BACKGROUND

The existing quick-release devices for motorcycle tank bags (disclosed in Chinese patents No. 220009989 U, No. 221541817 U and No. 110139795 B, and European patent publication No. 3819198A1) mainly depend on the combination of a latch assembly and a fastening hole to achieve the detachment and position adjustment of the tank bag. However, these quick-release devices struggle with deficiencies in terms of lock synchronization, drive structure and sliding adjustment.

### (1) Poor lock synchronization

The existing technical solutions rely on the independent drive of symmetrical latch plates, and lack a synchronization mechanism. For instance, the devices disclosed in Chinese patents No. 220009989U and No. 110139795B are based on the cooperation between a pull rod and a triangular fastening hole; and Chinese patent No. 221541817U adopts a configuration involving a pull rod and an inclined drive groove. However, the active latch plate and the driven latch plate are prone to asynchronous movement due to machining tolerances or wear, which will further cause incomplete retraction or extension of the fastening head at one side, thereby leading to unlocking failure or insecure locking.

Moreover, the reset of the latch plate relies on elastic force of a spring, while for a nonlinear transmission path (e.g., a triangular fastening hole), the spring may suffer from uneven stress distribution, which will cause jitter or incomplete return of the latch plate, and adversely affect the engagement between the fastening head and the fastening hole, thereby leading to poor return.

### (2) Inefficient drive structure

The actuating components predominantly employ a pull strap (see Chinese patents No. 220009989U and No. 221541817U), or a rigid pushing element (see Chinese patent No. 110139795B), where a push column is driven to slide within the fastening hole. It is required to apply a relatively large pulling force to overcome multidirectional friction, resulting in laborious unsmooth operation. Furthermore, the combination of a flexible pull strap with a rigid transmission mechanism makes the operation more unsmooth, and the pull strap is prone to wear and fracture, thereby compromising the overall reliability of the device.

### (3) Defects of sliding adjustment structure

The devices disclosed by Chinese patents No. 220009989U and No. 221541817U, and European patent publication No. 3819198A1 all have the following deficiencies.

The existing sliding adjustment relies on the frictional fixation between an elastic element and a mating groove. Uneven sliding resistance makes the adjustment process unsmooth, making it difficult to achieve smooth and stepless adjustment.

The machining tolerances or wear causes the presence of a gap between the fastening head and the fastening hole, leading to poor securing stability, and even detachment of the tank bag on bumpy roads.

Due to a lack of feedback mechanism, users can not perceive the sliding position, and multiple operations are required to achieve the locking at the target position, resulting in cumbersome operation.

The above defects seriously limit the quick-release device's operating efficiency and user experience. There is an urgent need to propose an improved solution with strong synchronization, low labor intensity, and smooth sliding.

### SUMMARY

To address the above defects in the prior art, the present disclosure aims to provide a quick-release device for a motorcycle tank bag with strong synchronization, labor-saving operation, and smooth sliding.

To achieve the above objectives, the present disclosure adopts the following technical solutions. A quick-release device for a motorcycle tank bag, comprising:
a quick-release main body;
a base plate; and
a tank cap mounting unit;
wherein the base plate is configured to be connected to a tank bag, and mount the tank bag;
the tank cap mounting unit is configured to be fixedly connected to an edge of a port of a motorcycle tank;
the tank cap mounting unit is provided with a fastening hole;
the quick-release main body comprises a housing, and a latch assembly arranged in the housing; a bottom of the housing is provided with a U-shaped groove configured to mount the tank cap mounting unit, and a side wall of the U-shaped groove is provided with a plurality of through holes; the latch assembly comprises an active latch plate, a driven latch plate, an operating component and at least one first return spring;
the active latch plate and the driven latch plate are slidably arranged in the housing; the operating component is configured to drive the active latch plate and the driven latch plate to move; and the at least one first return spring is configured to abut against the active latch plate and/or the driven latch plate;
an outer end of each of the active latch plate and the driven latch plate is provided with a fastening head; a synchronization gear is rotatably arranged in the housing; and an inner end of each of the active latch plate and the driven latch plate is provided with a rack; the rack is configured to engage with the synchronization gear, such that when the operating component drives the active latch plate to move, the synchronization gear drives the driven latch plate to move synchronously, and the fastening head is driven to retract from or extend out of the plurality of through holes to be clamped within the fastening hole to achieve locking;
the operating component comprises a rotation shaft, an actuating lever and an inner pivot arm; the rotation shaft is rotatably arranged on the housing; the actuating lever is arranged outside the housing; and the inner pivot arm is arranged inside the housing;
in response to a case that an external force is applied to the actuating lever, the operating component is configured to rotate about the rotation shaft, so as to directly or indirectly drive the active latch plate and the driven latch plate to move toward each other via the inner pivot arm, thereby causing the fastening head to retract into the housing; and
in response to a case that the external force is removed, the at least one first return spring is configured to offer an elastic force to drive the active latch plate and the driven latch plate to move away from each other, thereby causing the fastening head to extend out of the housing and to be clamped within the fastening hole to achieve locking.

In some embodiments, the U-shaped groove is configured to recess inwardly on a lower end surface of the housing such that a U-shaped boss is formed inside the housing;
the plurality of through holes are provided on a side wall of the U-shaped boss, and communicate with the U-shaped groove;
the synchronization gear is rotatably arranged within an area enclosed by the U-shaped boss; and the inner end of each of the active latch plate and the driven latch plate is configured to be at least partially arranged in the area enclosed by the U-shaped boss; and the rack is configured to correspond to the synchronization gear, and the fastening head is configured to correspond to the plurality of through holes.

In some embodiments, the inner end of the driven latch plate is configured as a U-shaped structure, and the rack is provided on a first arm of the U-shaped structure;
the synchronization gear is rotatably arranged in a U-shaped opening of the driven latch plate; the inner end of the active latch plate is configured as a bar-shaped plate, and the rack is arranged on the bar-shaped plate;
the bar-shaped plate is insertedly provided within the U-shaped opening of the driven latch plate such that the rack of the active latch plate engages with a first side of the synchronization gear, and the rack of the driven latch plate engages with a second side of the synchronization gear; and a second arm of the U-shaped structure is configured to limit the bar-shaped plate in an engagement direction.

In some embodiments, the housing is provided with a locking assembly comprising a mechanical lock;
a locking plate of the mechanical lock is configured to enter a movement path of the active latch plate or the driven latch plate;
in response to a case that the locking plate enters the movement path, the locking plate is configured to abut against the active latch plate or the driven latch plate, thereby restricting movement of the active latch plate or the driven latch plate;
in response to a case that the locking plate is withdrawn from the movement path, the active latch plate and the driven latch plate are configured to freely move; and
a supporting plate is arranged inside the housing; in response to a case that the locking plate is rotated to enter the movement path, the supporting plate is configured to abut against a side of the locking plate to enhance locking stability.

In some embodiments, the outer end of the active latch plate is configured as an inclined or curved surface, and the inclined or curved surface is provided with a clamping groove;
an end of the inner pivot arm is configured as a curved plate, and an end of the curved plate is configured to press against the inclined or curved surface of the active latch plate; and
in response to a case that the end of the inner pivot arm presses against the clamping groove, a tactile or auditory feedback is generated, and the fastening head of the active latch plate and the fastening head of the driven latch plate are configured to be fully retracted into the housing.

In some embodiments, the housing comprises a base and a cover plate overlying the base; and the plurality of through holes are arranged on the base;
an edge of each of the base and the cover plate is provided with an arc-shaped groove; and in response to a case that the base and the cover plate are assembled, the arc-shaped groove of the base is configured to be butt-jointed with the arc-shaped groove of the cover plate to form a hinge seat; and
the rotation shaft of the operating component is insertedly provided in the hinge seat, and is configured to be rotatable about an axis of the hinge seat.

In some embodiments, a positioning assembly is arranged on an upper end surface of the quick-release main body;
a positioning slide groove is arranged on a lower end surface of the base plate, and is configured to extend along a sliding direction of the base plate;
a plurality of positioning notches are arranged spaced apart within the positioning slide groove along the sliding direction;
the positioning assembly comprises a toothed engagement portion, wherein the toothed engagement portion is configured to selectively engage with or exit from the plurality of positioning notches;
in response to a case that the toothed engagement portion engages with any one of the plurality of positioning notches, a position of the base plate relative to the quick-release main body is locked; and
in response to a case that the toothed engagement portion exits from the plurality of positioning notches, a base plate is configured to be slidably adjusted relative to the quick-release main body. In some embodiments, the positioning assembly comprises a moving block arranged slidably and a second return spring; and the second return spring is configured to elastically drive the moving block to be returned;
an adjusting slide groove is provided on the upper end surface of the quick-release main body, and a spring seat is fixed in the adjusting slide groove;
the moving block is slidably embedded in the adjusting slide groove; a first end of the second return spring is configured to abut against the spring seat; and a second end of the second return spring is configured to abut against the moving block; and
an inner end of the moving block is provided with the toothed engagement portion, and an outer end of the moving block is configured to extend to a side of the base plate or a side of the quick-release main body to serve as an actuation end.

In some embodiments, a plurality of fixed engagement teeth are arranged side by side in the positioning slide groove, and spaces between any adjacent two among the plurality of fixed engagement teeth are configured to form the plurality of positioning notches;
a cross-section of each of the plurality of positioning notches is configured to be flared, with a width increasing from inside to outside;
a cross-section of a movable engagement tooth is configured to be tapered, with a width deceased from a root end to an outer end;
in response to a case that the movable engagement tooth engages with the plurality of positioning notches, the cross-section of the movable engagement tooth is adapted to the cross-section of each of the plurality of positioning notches; and
a height of each of the plurality of fixed engagement teeth is configured to be identical from a root end to an outer end, or decrease from the root end to the outer end; and a height of the movable engagement tooth is configured to be identical from the root end to the outer end, or decrease from the root end to the outer end.

In some embodiments, a plurality of feedback grooves are provided along an extending direction of the positioning slide groove, and the plurality of feedback grooves are arranged in an extending direction of the plurality of positioning notches;
an elastic feedback member is arranged on an inner end of the positioning assembly, and comprises an elastic corrugated plate; two ends of the elastic corrugated plate are fixed to an inner end of the moving block; and the elastic corrugated plate is provided with at least one feedback protrusion fitting the plurality of feedback grooves; and
in response to a case that the base plate slides, the elastic feedback member is configured to sequentially engage with or exit from the plurality of feedback grooves to generate a tactile or auditory feedback during movement.

### BRIEF DESCRIPTION OF THE DRAWINGS

Fig. 1 schematically shows a perspective view of a quick-release device for a motorcycle tank bag according to an embodiment of the present disclosure;
Fig. 2 schematically shows a mounting diagram of a quick-release main body and a base plate according to an embodiment of the present disclosure;
Fig. 3 schematically shows an exploded view of the quick-release device for the motorcycle tank bag according to an embodiment of the present disclosure;
Fig. 4 schematically shows a mounting diagram of the quick-release main body and a tank cap mounting unit according to an embodiment of the present disclosure;
Fig. 5 schematically shows a bottom view of the quick-release main body according to an embodiment of the present disclosure (with a fastening head extended);
Fig. 6 schematically shows a bottom view of the quick-release main body according to an embodiment of the present disclosure (with a fastening head retracted);
Fig. 7 schematically shows an exploded view of the quick-release main body according to an embodiment of the present disclosure;
Fig. 8 schematically shows an internal view of the quick-release main body according to an embodiment of the present disclosure;
Fig. 9 structurally shows an active latch plate according to an embodiment of the present disclosure;
Fig. 10 schematically shows a base of a housing according to an embodiment of the present disclosure;
Fig. 11 structurally shows an operating component according to an embodiment of the present disclosure;
Fig. 12 schematically shows a first structure of the base plate according to an embodiment of the present disclosure;
Fig. 13 schematically shows a second structure of the base plate according to an embodiment of the present disclosure;
Fig. 14 schematically shows a first structure of the positioning assembly above the quick-release main body according to an embodiment of the present disclosure;
Fig. 15 schematically shows a second structure of the positioning assembly above the quick-release main body according to an embodiment of the present disclosure; and
Fig. 16 structurally shows a moving block according to an embodiment of the present disclosure.

### DETAILED DESCRIPTION OF EMBODIMENTS

The embodiments of the present disclosure will be described detailly, and the examples of the embodiments will be shown in the accompanying figures, where the same or similar labels and letters in the accompanying figures indicate the same or similar components or components with the same or similar functions. It should be understood that the embodiments disclosed herein with reference to the accompanying figures are merely illustrative of the disclosure, and are not intended to limit the present disclosure.

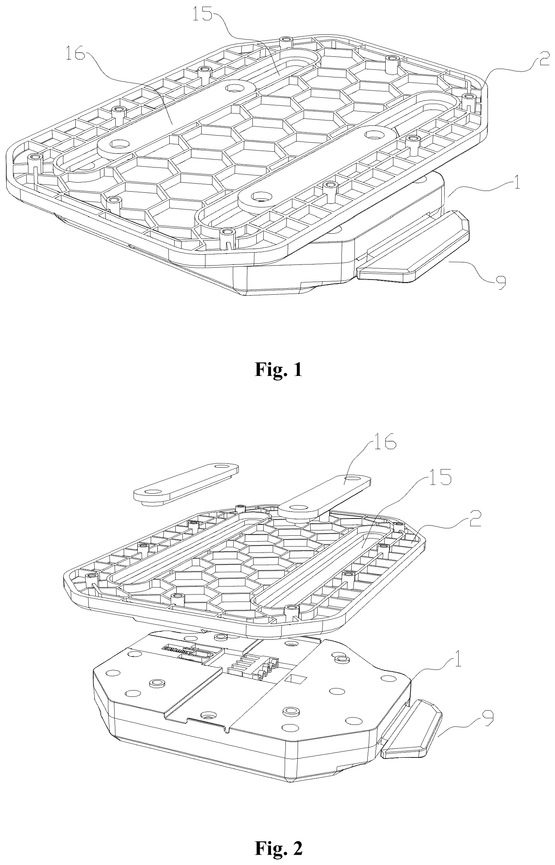

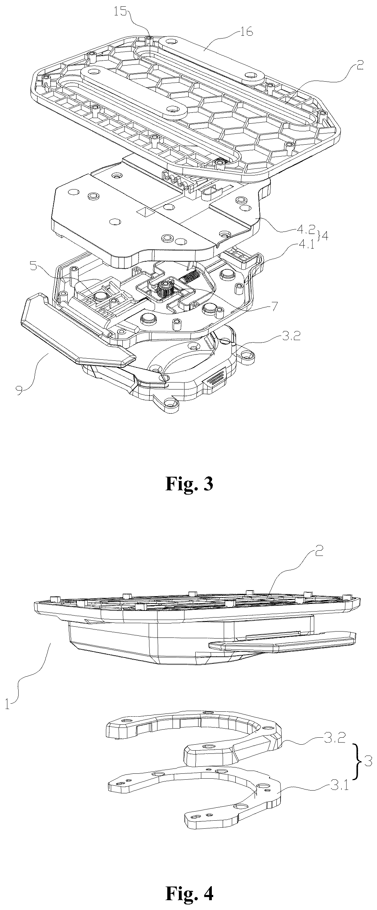

Referring to Figs. 1-16, the present disclosure provides a quick-release device for a motorcycle tank bag, including a quick-release main body 1, a base plate 2, and a tank cap mounting unit 3. The base plate 2 is configured to be connected to a tank bag, and mount the tank bag. The tank cap mounting unit 3 is configured to be fixedly connected to an edge of a port of a motorcycle tank. Referring to Fig. 4, the tank cap mounting unit 3 includes an adapter plate 3.1 and an adapter 3.2. The adapter plate 3.1 and the adapter 3.2 are configured as U-shaped structures, and are adapted to each other. The adapter plate 3.1 is directly fixed on the motorcycle tank cap, and the adapter 3.2 is arranged on the adapter plate 3.1 via bolts. The adapter 3.2 is provided with fastening holes to allow the quick-release main body 1 to achieve locking or unlocking (as described below). Additionally, magnets are respectively arranged within the adapter 3.2 and the quick-release main body 1, such that when the quick-release main body 1 is mounted on the adapter 3.2, the quick-release main body 1 is preliminarily located through the magnets.

According to another embodiment in Fig. 3, the adapter plate 3.1 and the adapter 3.2 are combined into an integral adapter, possessing the above functions.

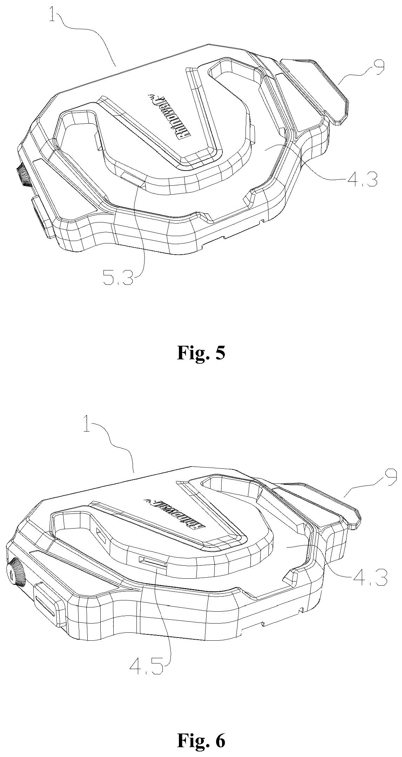

Referring to Figs. 5-9, the present disclosure provides a quick-release main body 1, including a housing 4 and a latch assembly arranged in the housing 4. A side wall of the housing 4 is provided with a plurality of through holes 4.5. The latch assembly includes an active latch plate 5, a driven latch plate 6, an operating component 9, and a first return spring 8, where the active latch plate 5 and the driven latch plate 6 are slidably arranged in the housing 4, and the operating component 9 is configured to drive the active latch plate 5 and the driven latch plate 6 to move. An outer end of each of the active latch plate 5 and the driven latch plate 6 is provided with a fastening head 5.3, and an inner end of each of the active latch plate 5 and the driven latch plate 6 is provided with a rack 5.4. The fastening head 5.3 is configured to extend out of or retract from the plurality of through holes 4.5. The operating component 9 is configured to be drivingly connected to the active latch plate 5. A synchronization gear 7 is rotatably arranged in the housing 4. The rack 5.4 is configured to engage with the synchronization gear 7, such that when the operating component 9 drives the active latch plate 5 to move, the synchronization gear 7 drives the driven latch plate 6 to move synchronously.

In this case, the synchronization gear 7 is configured to be rotatably arranged via a bearing or a bushing to ensure a gear to stably rotate. The racks 5.4 of the inner ends of the active latch plate 5 and the driven latch plate 6 are machined by milling or stamping. A tooth profile of the rack 5.4 is configured to be spur or helical, and is also adapted to a tooth profile of the synchronization gear 7. The operating component 9 is configured as a pull rod, a push button, or a rotary knob, and a form of the operating component 9 is adjusted according to practical applications. The first return spring 8 is configured as a helical spring, a leaf spring, or a torsion spring. An elastic force of the return spring is designed based on a force required for extension and retraction of the fastening head 5.3.

In some embodiments, when the operating component 9 is pulled or pressed, the active latch plate 5 is driven via the operating component 9 to slide along the housing 4. The rack 5.4 of the active latch plate 5 is configured to drive the synchronization gear 7 to rotate, and the rotation of the synchronization gear 7 further drives the rack 5.4 of the driven latch plate 6, thereby enabling the driven latch plate 6 to slide synchronously. Consequently, the fastening heads 5.3 of the active latch plate 5 and the driven latch plate 6 are configured to extend out of or retract from the plurality of through holes 4.5 to achieve locking or unlocking. After releasing the operating component 9, the first return spring 8 drives the active latch plate 5 and driven latch plate 6 to return, such that the fastening head 5.3 returns to an initial position.

Compared to the prior art, the present disclosure ensures synchronous movement of the active latch plate 5 and the driven latch plate 6 by utilizing an engagement between the synchronization gear 7 and the racks 5.4, thereby eliminating asynchronous actions of the latch plates. Additionally, the operating component 9 is configured to directly drive the active latch plate 5 to enhance operational efficiency and reduce the operational force required by users. The arrangement of the first return spring 8 allows the fastening heads 5.3 to automatically return after operating, thereby facilitating to use. The device has advantages of simple structure, smooth operation, high reliability and durability.

In some embodiments, the inner end of each of the active latch plate 5 and the driven latch plate 6 are provided with the rack 5.4. The rack 5.4 of the active latch plate 5 engages with a first side of the synchronization gear 7, and the rack 5.4 of the driven latch plate 6 engages with a second side of the synchronization gear 7. A moving direction of the active latch plate 5 is configured to be opposite to a moving direction of the driven latch plate 6.

In some embodiments, the inner end of each of the active latch plate 5 and the driven latch plate 6 are provided with the rack 5.4. The rack 5.4 of the active latch plate 5 engages with the first side of the synchronization gear 7, and the rack 5.4 of the driven latch plate 6 engages with the second side of the synchronization gear 7. The synchronous movement of the active latch plate 5 and the driven latch plate 6 is achieved by rotating the synchronization gear 7. The first side of the synchronization gear 7 is provided with the rack 5.4 of the active latch plate 5, and the second side of the synchronization gear 7 is provided with the rack 5.4 of the driven latch plate 6, thereby ensuring synchronization and stability of the active latch plate 5 and the driven latch plate 6 during movement. This design effectively addresses the issue of poor synchronization between the active latch plate 5 and the driven latch plate 6 during movement, and enhances the reliability and operational efficiency of the locking assembly. The technical solution of the present disclosure enables the active latch plate 5 and the driven latch plate 6 to move in opposite directions by introducing the synchronization gear 7, thereby allowing the active latch plate 5 and the driven latch plate 6 to synchronously move.

Compared to the prior art, the technical solution of the present disclosure significantly improves the synchronization and stability of the movement of latch plates, and reduces issues of unlocking failure or insecure locking caused by asynchrony. Furthermore, the design of the synchronization gear 7 simplifies the structure of the latch assembly, reduces machining and mounting difficulties, and enhances the reliability and service life of products.

In some embodiments, the housing 4 is provided with a guide post 10 or a guide groove 10.1. The active latch plate 5 and the driven latch plate 6 are provided with a guide groove 10.1 or a guide post 10. The guide post 10 or the guide groove 10.1 of each of the active latch plate 5 and the driven latch plate 6 is adapted to the guide post 10 or the guide groove 10.1 of the housing 4. The guide post 10 is embedded in the guide groove 10.1 to limit sliding directions of the active latch plate 5 and the driven latch plate 6.

In some embodiments, the guide post 10 is configured to be cylindrical or rectangular, with a diameter or width adapting to a size of the guide groove 10.1 to ensure the guide post 10 to be smoothly embedded in the guide groove 10.1. In this case, this technical solution ensures directional stability during the sliding process of the active latch plate 5 and the driven latch plate 6, through the adaptation between the guide post 10 or the guide groove 10.1 provided in the housing 4 and the guide groove 10.1 or the guide post 10 provided on the active latch plate 5 and the driven latch plate 6, thereby preventing the deviation of sliding trajectories. Consequently, the sliding directions of the active latch plate 5 and the driven latch plate 6 are strictly limited to the paths of the guide post 10 and the guide groove 10.1, thereby enhancing the precision and reliability of the extension and retraction of the fastening heads 5.3.

Compared to the prior art, the technical solution effectively addresses the issue of directional instability during the sliding process of the active latch plate 5 and the driven latch plate 6, reduces unlocking failure or insecure locking caused by the deviation of the sliding trajectory, and improves the overall performance and user experience of the quick-release device.

Referring to Figs 5-6 and Fig. 10, a U-shaped groove 4.3 is configured to recess inwardly on a lower end surface of the housing 4such that a U-shaped boss 4.4 is formed inside the housing 4. The plurality of through holes 4.5 are provided on a side wall of the U-shaped boss 4.4, and communicate with the U-shaped groove 4.3. The synchronization gear 7 is rotatably arranged at a center of an area enclosed by the U-shaped boss 4.4. The inner end of each of the active latch plate 5 and the driven latch plate 6 is configured to be at least partially arranged in the area enclosed by the U-shaped boss 4.4. The rack 5.4 is configured to correspond to the synchronization gear, and the fastening head 5.3 is configured to correspond to the plurality of through holes 4.5.

In some embodiments, the design of the U-shaped groove 4.3 enables the lower end surface of the housing 4 to adaptively arrange the U-shaped adapter 3.2. The formation of the U-shaped boss 4.4 further optimizes internally spatial layout. The synchronization gear 7 is arranged at the center of the U-shaped boss 4.4 to ensure the active latch plate 5 and the driven latch plate 6 to synchronously move. The configuration where the through hole 4.5 is in communication with the U-shaped groove 4.3 allows the fastening head 5.3 to extend out of and retract from the plurality of through holes 4.5 more smoothly, thereby improving operational convenience and stability.

In some preferred embodiments, the depth and width of the U-shaped groove 4.3 are adjusted based on practical requirements to adapt to the adapters 3.2 with different sizes. Additionally, the height and shape of the U-shaped boss 4.4 is optimized according to the size and mounting requirement of the synchronization gear 7 to ensure the precise engagement between the synchronization gear 7 and the rack 5.4.

In this case, the technical solution of the present disclosure simplifies the internal structure of the housing 4 through the design of the U-shaped groove 4.3 and the U-shaped boss 4.4, resulting in a more compact and rational layout for the synchronization gear 7, the active latch plate 5, and the driven latch plate 6. The synchronization gear 7 is arranged at the center of the U-shaped boss 4.4 to ensure the active latch plate 5 and the driven latch plate 6 to synchronously move, thereby avoiding poor synchronization caused by complex structures. The configuration where the through hole 4.5 is in communication with the U-shaped groove 4.3 allows the fastening head 5.3 to extend out of and retract from the through hole 4.5 more smoothly, thereby improving operational convenience and stability.

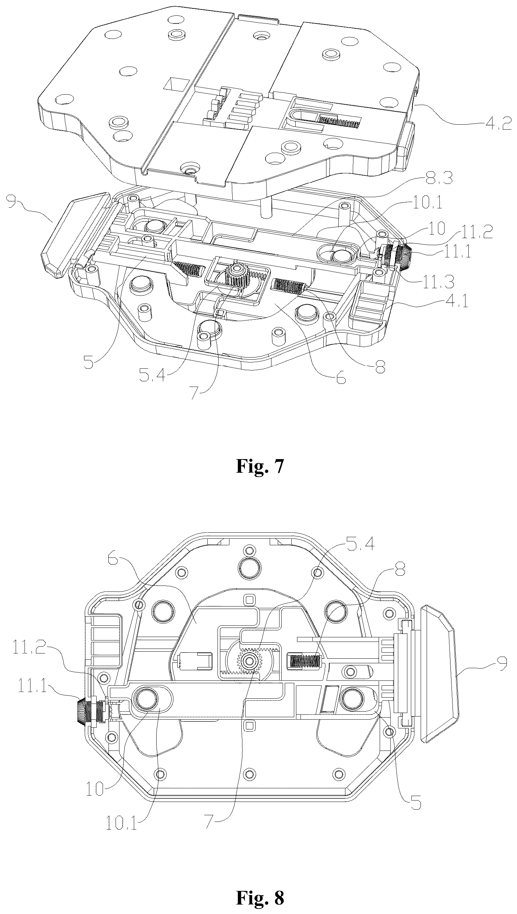

Compared to the prior art, the technical solution of the present disclosure not only simplifies the structure, but also improves the smoothness and reliability of operation, thereby effectively addressing technical problems of structural complexity and poor synchronization in the prior art. Referring to Figs 7-8, the inner end of the driven latch plate 6 is configured as a U-shaped structure, and the rack 5.4 is provided on a first arm of the U-shaped structure. The synchronization gear 7 is rotatably arranged in a U-shaped opening of the driven latch plate 6. The inner end of the active latch plate 5 is configured as a bar-shaped plate, and the rack 5.4 is arranged on the bar-shaped plate. The bar-shaped plate is insertedly provided within the U-shaped opening of the driven latch plate 6 such that the rack 5.4 of the active latch plate 5 engages with the first side of the synchronization gear 7, and the rack 5.4 of the driven latch plate 6 engages with the second side of the synchronization gear 7. A second arm of the U-shaped structure is configured to limit the bar-shaped plate in the engagement direction.

In some embodiments, the U-shaped structure of the driven latch plate 6 allows the synchronization gear 7 to be arranged in the inner end of the driven latch plate 6, and engages with the synchronization gear 7 via the rack 5.4 to ensure the active latch plate 5 and the driven latch plate 6 to move synchronously under a driving action of the synchronization gear 7. The bar-shaped plate of the active latch plate 5 is insertedly provided within the U-shaped opening of the driven latch plate 6, such that the rack 5.4 of the active latch plate 5 is arranged on the first side of the synchronization gear 7, and the rack 5.4 of the driven latch plate 6 is arranged on the second side of the synchronous gear 7, thereby ensuring engagement stability. The second arm of the U-shaped structure of the driven latch plate 6 is configured to limit the bar-shaped plate of the active latch plate 5. In other words, the bar-shaped plate of the active latch plate 5 and the U-shaped structure at the inner end of the driven latch plate 6 form an interlocking configuration, which prevents the bar-shaped plate from shifting during the movement and disengaging from the synchronization gear 7, thereby ensuring consistent and stable movement direction for the latch plates.

In this case, the technical solution of the present disclosure achieves precise engagement and limitation of the active latch plate 5 and the driven latch plate 6 under the driving action of the synchronization gear 7 through the U-shaped structure of the driven latch plate 6.

Compared to the prior art, the technical solution not only simplifies the structure and reduces machining and mounting difficulties, but also significantly improves the synchronization and stability of the movement of latch plates. The technical solution also avoids tooth skipping or misalignment caused by wear or machining tolerances, thereby enhancing the overall reliability and service life of the device.

In some embodiments, the operating component 9 is configured to drive the active latch plate 5 and the driven latch plate 6 to move toward each other, thereby causing the fastening head 5.3 to retract into the housing 4. The first return spring 8 is configured to offer an elastic force to drive the active latch plate 5 and the driven latch plate 6 to move away from each other, thereby causing the fastening head 5.3 to extend out of the housing 4.

In some embodiments, the operating component 9 is configured to drive the active latch plate 5 and the driven latch plate 6 to move toward each other through various implementations. For example, the operating component 9 is configured as a lever structure. The lever is configured to be manually actuated to drive the active latch plate 5 and the driven latch plate 6 to move inward, thereby retracting the fastening head 5.3. The first return spring 8 is arranged between the active latch plate 5 and the driven latch plate 6. When the operating component 9 is released, the first return spring 8 offers the elastic force to drive the active latch plate 5 and the driven latch plate 6 to move away from each other, thereby causing the fastening head 5.3 to extend out of the housing 4. Additionally, the first return spring 8 is arranged inside the housing 4, thereby directly applying the elastic force to the active latch plate 5 and the driven latch plate 6 to achieve extension of the fastening head 5.3.

In this case, the technical solution achieves stable retraction and extension of the fastening head 5.3 through the cooperation of the operating component 9 and the first return spring 8. The operating component 9 drives the active latch plate 5 and the driven latch plate 6 to move toward each other, thereby causing the fastening head 5.3 to retract into the housing 4 to achieve unlocking. The first return spring 8 offers the elastic force to drive the active latch plate 5 and the driven latch plate 6 to move away from each other, thereby causing the fastening head 5.3 to extend out of the housing 4 to achieve locking. This design ensures that the fastening head 5.3 can stably retract and extend under the action of the operating component 9 and the first return spring 8, thereby solving the technical problem of unstable movement of the fastening head 5.3.

Compared to the prior art, the technical solution has the advantages of user-friendly operation, structural stability, and prolonged service life. The cooperation between the operating component 9 and the first return spring 8 enables smoother movement of the fastening head 5.3, reduces the required operating force, and enhances the user experience. Moreover, the design not only minimizes component wear and prolongs the service life, but also can be suitable for highfrequency usage scenarios.

In some embodiments, at least one first return spring 8 is arranged in the housing, and the at least one first return spring 8 is configured to abut against the active latch plate 5 and/or the driven latch plate 6.

In some embodiments, by arranging the at least one first return springs 8, the active latch plate 5 and the driven latch plate 6 are ensured to be subjected to uniform force during the reset process, thereby avoiding unstable reset of the latch plates caused by uneven distribution or single configuration of the first return spring 8. The distribution of the at least one first return springs 8 can enhance the reset force on the latch plates, and improve the stability of the extension or retraction of the fastening head 5.3, thereby enhancing the reliability and user experience of the quick-release main body 1.

In this case, the first return spring 8 is configured as a helical spring, a leaf spring, or other elastic components. The specific number and location can be adjusted according to practical requirements. In some preferred embodiments, the housing 4 is provided with one of the at least one first return spring 8, where the first return spring 8 is configured to abut against the active latch plate 5 to reduce a reverse force during the driving process of the synchronization gear 7 and the rack 5.4, thereby reducing the wear of the synchronization gear 7 and the rack 5.4. When the driven latch plate 6 is provided with the first return spring 8, the operating component 9 firstly acts on the active latch plate 5, such that the active latch plate 5 needs to overcome a reset elastic force on the driven latch plate 6 before moving. The reset elastic force is conducted through the cooperation between the synchronization gear 7 and the rack 5.4, thus causing the synchronization gear 7 and the rack 5.4 to generate wear. The technical solution effectively reduces the wear and extends the service life of the quick-release main body 1 by optimizing the arrangement of the first return spring 8.

In this case, The technical solution of the present disclosure addresses technical problems through the reasonable arrangement of the first return spring 8, such as unstable reset of the latch plates caused by the single configuration or uneven distribution of the first return spring, improves the stability and reliability of the quick-release main body 1, reduces the wear of the synchronization gear 7 and the rack 5.4, and enhances the overall quality of the product.

Referring to Figs. 7-8, the housing 4 is provided with a locking assembly including a mechanical lock 11.1. A locking plate 11.2 of the mechanical lock 11.1 is configured to enter a movement path of the active latch plate 5 or the driven latch plate 6. When the locking plate 11.2 enters the movement path, the locking plate 11.2 is configured to abut against the active latch plate 5 or the driven latch plate 6, thereby restricting movement of the active latch plate or the driven latch plate. When the locking plate 11.2 is withdrawn from the movement path, the active latch plate 5 and the driven latch plate 6 are configured to freely move.

In some embodiments, the locking plate 11.2 enters or is withdrawn from the movement path by rotating or sliding the mechanical lock 11.1.

In some preferred embodiments, the mechanical lock 11.1 is configured as a structure with a rotary handle. The locking plate 11.2 is driven to enter or be withdrawn from the movement path by rotating the handle. Alternatively, based on unlocking with a key, the locking plate 11.2 is driven to rotate by rotating a key cylinder. Furthermore, the locking plate 11.2 is configured to be wedge-shaped or rectangular to more effectively abut against the latch plate when entering the movement path, thereby enhancing locking stability. In addition, an end of the locking plate 11.2 can be provided with a protrusion or a groove to engage with a corresponding structure on the latch plates, further improving locking reliability.

In this case, the technical solution of the present disclosure allows the active latch plate 5 and the driven latch plate 6 to constrainedly move under a locked state via the locking assembly. When the locking plate 11.2 enters the movement path, the locking plate 11.2 directly contacts with the latch plate to prevent movement of the latch plates and ensure the stability of the locked state.

When the locking plate 11.2 is withdrawn from the movement path, the latch plate is configured to freely move, thereby achieving unlocking. Through a simple mechanical structure, this design addresses an issue in the prior art where the movement of the latch plate is not limited under the locked state, simultaneously improving operational convenience and locking reliability.

Compared to the prior art, the technical solution of the present disclosure has advantages of simple structure, convenient operation, stable locking, etc. It also adds the functions of anti-theft and anti-forced detachment to effectively improve the user experience.

In some embodiments, the active latch plate 5 is provided with an extending plate 8.3. The locking plate 11.2 is configured to enter or be withdrawn from the movement path of the extending plate 8.3. When the locking plate 11.2 enters the movement path, the locking plate 11.2 is configured to abut against an end of the extending plate 8.3, or to engage with a notch of the extending plate 8.3. The housing 4 is provided with a supporting plate 11.3. When the locking plate 11.2 enters the movement path, the supporting plate 11.3 is configured to abut against a side of the locking plate 11.2 to enhance the locking stability.

In some embodiments, the extending plate 8.3 is configured as a plate-shaped structure extending outward from a side of the active latch plate 5. A notch or a protrusion is arranged at the end of the extending plate 8.3 to enable the locking plate 11.2 to abut against or engage with the extending plate 8.3 more stably and securely when the locking plate 11.2 enters the movement path. A length and shape of the extending plate 8.3 are adjusted according to practical requirements to ensure that the locking plate 11.2 is accurately butt-jointed with the notch or the end of the extending plate 8.3 when the locking plate 11.2 enters the movement path. The supporting plate 11.3 is fixed to an inner wall of the housing 4. A position and shape of the supporting plate 11.3 are configured to correspond to an opposite side of the locking plate 11.2, such that when the locking plate 11.2 enters the movement path, the supporting plate 11.3 effectively abuts against the locking plate 11.2 to prevent loosening or deviation. The supporting plate 11.3 is made of elastic material to provide a cushioning effect, further enhancing locking stability.

In this case, through the cooperation between the extending plate 8.3 and the supporting plate 11.3, the locking stability between the locking plate 11.2 and the active latch plate 5 is significantly enhanced. The extending plate 8.3 provides an additional contact or engagement position for the locking plate 11.2, enabling the locking plate 11.2 to abut against or engage with the extending plate 8.3 more securely when the locking plate 11.2 enters the movement path, thereby reinforcing the locking stability. When the locking plate 11.2 enters the movement path, the supporting plate 11.3 is configured to abut against the opposite side of the locking plate 11.2, further strengthening the locking effect and preventing loosening or deviation of the locking plate 11.2 under the locked state.

Compared to the prior art, the technical solution of the present disclosure effectively addresses an issue of poor locking stability between the locking plate 11.2 and the active latch plate 5 through simple structural improvements, thereby enhancing the reliability and durability of the latch assembly.

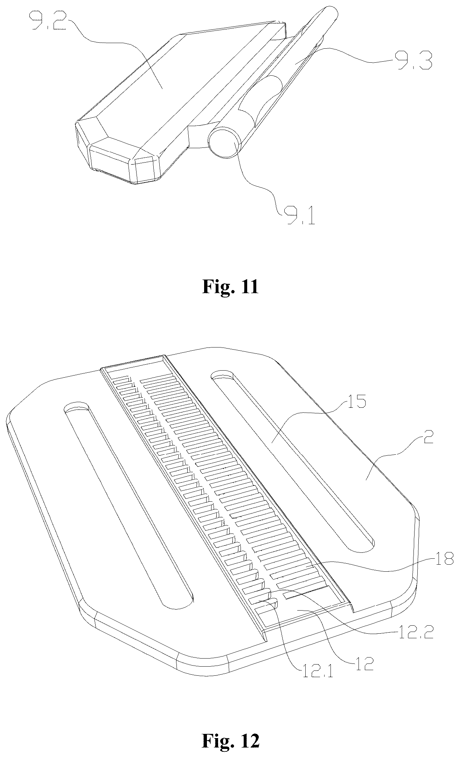

Referring to Fig. 11, the operating component 9 includes a rotation shaft 9.1, an actuating lever 9.2, and an inner pivot arm 9.3, where the rotation shaft 9.1 is rotatably arranged on the housing 4, the actuating lever 9.2 is arranged outside the housing 4, and the inner pivot arm 9.3 is arranged inside the housing 4. The rotation shaft 9.1 is configured to fixedly connected to the inner pivot arm 9.3, or to be integrally formed with the inner pivot arm 9.3. When an external force is applied to the actuating lever 9.2, the operating component 9 rotates about the rotation shaft 9.1. Both the active latch plate 5 and the driven latch plate 6 are directly or indirectly driven via the inner pivot arm 9.3 to slide.

In this case, the rotation shaft 9.1 of the operating component 9 is fixed to the housing 4 via a bearing or a bushing to ensure smooth rotation of the operating component 9. The actuating lever 9.2 is connected to the inner pivot arm 9.3 by welding, bolting, or integrally forming to enhance structural stability. An end of the inner pivot arm 9.3 is configured as an inclined or curved surface to better contact with an outer end of the active latch plate 5, thereby driving the latch plates to slide more effectively.

By rotatably arranging the operating component 9 and utilizing the linkage between the actuating lever 9.2 and the inner pivot arm 9.3, the technical solution enables an operator to drive the active latch plate 5 and the driven latch plate 6 to slide by rotating the actuating lever 9.2, thereby achieving extension or retraction of the fastening head 5.3. Consequently, this design avoids the multidirectional friction inherent in conventional pull-strap operation mechanisms, simplifying the operational process and improving both operational convenience and tactile feedback. The structural design of the housing 4 and the latch assembly ensures the stability and reliability of the device, while the arrangement of the first return spring 8 guarantees automatic reset of the fastening head 5.3 when lacking an external force. The technical solution effectively addresses the issues of laborious operation and poor tactile feedback in the prior art, thereby enhancing the user experience.

In some embodiments, the inclined surface at the end of the inner pivot arm 9.3 presses against the outer end of the active latch plate 5, where the inclined surface pressing refers to a type of inclined surface cooperation capable of altering the direction of force. This technical solution can refer to the following description where the outer end of the active latch plate 5 is configured as an inclined surface or a curved surface to achieve the inclined surface pressing. When the operating component 9 rotates, the active latch plate 5 is driven to move along the inner wall of the housing 4 through the sliding contact of the inner pivot arm 9.3, thereby converting the rotational force of the inner pivot arm 9.3 into the movement of the active latch plate 5. During using, the operating component 9 drives the active latch plate 5 and the driven latch plate 6 to move toward each other, thereby causing the fastening head 5.3 to retract into the housing 4, thereby achieving unlocking. The elastic force of the first return spring 8 drives the active latch plate 5 and the driven latch plate 6 to move away from each other, thereby causing the fastening head 5.3 to extend out of the housing 4, thereby achieving locking. Through the cooperation of the operating component 9 and the first return spring 8, this design enables automatic extension and retraction of the fastening head 5.3, simplifies the operational steps, and improves using convenience.

Compared to the prior art, the operating component 9 of the present disclosure adopts a rigid transmission structure, thereby avoiding the issues of laborious operation and poor tactile feedback associated with flexible pull straps, and significantly improving operational smoothness and comfort. Accordingly, the technical solution of the present disclosure achieves a smoother driving effect by optimizing the contact manner between the inner pivot arm 9.3 and the active latch plate 5.

In some embodiments, the sliding contact between the inner pivot arm 9.3 and the outer end of the active latch plate 5 reduces the multidirectional friction in conventional pull-strap drive mechanisms, resulting in a more labor-saving drive process and smoother operation. Compared to the prior art, the present disclosure eliminates the poor tactile feedback and laborious operation inherent in pull-strap drive systems, ensuring more direct and efficient force transmission.

In some embodiments, a length of the actuating lever 9.2 is configured to be greater than a length of the inner pivot arm 9.3 to form a labor-saving lever structure.

In some embodiments, the actuating lever 9.2 is configured to be fixedly connected to the inner pivot arm 9.3, or to be integrally formed with the inner pivot arm 9.3. When an external force is applied to the actuating lever 9.2, the operating component 9 rotates about the rotation shaft 9.1. The active latch plate 5 and the driven latch plate 6 are directly or indirectly driven via the inner pivot arm 9.3 to slide. In this case, the length of the actuating lever 9.2 is greater than the length of the inner pivot arm 9.3, such that when users operate the actuating lever 9.2, the inner pivot arm 9.3 is driven with relatively smaller force, resulting in indirectly driving the active latch plate 5 and the driven latch plate 6 to slide.

In some preferred embodiments, the actuating lever 9.2 is configured as a long strip, and the length of the actuating lever 9.2 is adjusted according to practical requirements to achieve an optimal labor-saving effective. In addition, the actuating lever 9.2 is configured to be connected to the inner pivot arm 9.3 by welding, bolting, integrally forming, or other methods to ensure structural stability and durability.

In this case, when users operate the actuating lever 9.2, the inner pivot arm 9.3 can be driven with relatively smaller force through this labor-saving lever structure, resulting in indirectly driving the active latch plate 5 and the driven latch plate 6 to slide. This design effectively reduces the operational force required by the user and improves the tactile feedback, thereby solving the issue of laborious operation and poor tactile feedback in the prior art.

Compared to the prior art, the technical solution of the present disclosure not only simplifies the operational process, but also significantly enhances the user experience. Especially when operating frequently, the technical solution effectively reduces hand fatigue.

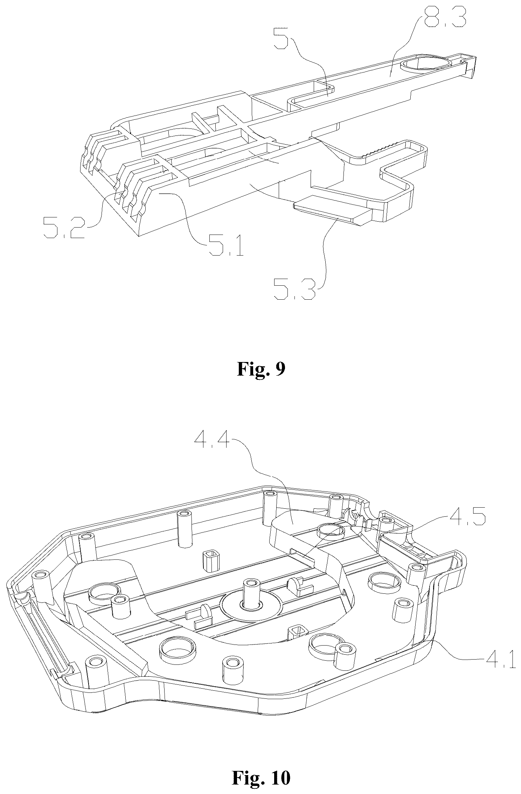

Referring to Fig. 9, the outer end of the active latch plate 5 is configured as an inclined or curved surface, and an end of the inner pivot arm 9.3 is configured as a curved plate, where the end of the curved plate is configured to press against the inclined or curved surface of the active latch plate 5. The outer end of the active latch plate 5 is configured as a single inclined surface, or a curved surface including a plurality of the inclined surface. The end of the inner pivot arm 9.3 is configured as the curved plate, and a radian of the curved plate is adapted to the inclined surface or the curved surface of the active latch plate 5.

In this case, the technical solution of the present disclosure configures the outer end of the active latch plate 5 as an inclined or curved surface, and the end of the inner pivot arm 9.3 as a curved plate, resulting in a smoother contact interface between the inner pivot arm 9.3 and the active latch plate 5 and a reduced frictional resistance. When the operating component 9 rotates, the end of the curved plate presses against the inclined or curved surface of the active latch plate 5. The active latch plate 5 is driven to move along the inner wall of the housing 4 through the sliding contact, thereby achieving smoother operation. This structural design effectively addresses the technical problem of high friction at the contact interface between the active latch plate 5 and the inner pivot arm 9.3 and non-smooth operation, improving operational convenience and user experience. Compared to the prior art, the technical solution of this disclosure reduces the force required from the user during operation, lowers hand fatigue, simultaneously enhancing the smoothness and reliability of operation.

Referring to Fig. 9, the outer end of the active latch plate 5 includes a plurality of rib plates 5.1 arranged in parallel. The outer end surface of the rib plate 5.1 is configured as an inclined or curved surface.

In some embodiments, the parallel arrangement of the rib plates 5.1 increases the structural strength of the outer end of the active latch plate 5, and the design of the inclined or curved surfaces optimizes the contact interaction with the inner pivot arm 9.3.

In some preferred embodiments, the rib plate 5.1 is made of metal material, and is fixed to the outer end of the active latch plate 5 by welding or riveting. Furthermore, a thickness and spacing of the rib plate 5.1 are adjusted according to practical requirements to further optimize the structural strength and contact effect.

In this case, by adopting the rib plate 5.1, the technical solution significantly enhances the structural strength of the outer end of the active latch plate 5, enabling the active latch plate 5 to withstand greater external forces without deformation during using. Concurrently, the design of the inclined or curved surfaces reduces the frictional resistance between the active latch plate 5 and the inner pivot arm 9.3, resulting in a more stable and smoother driving operation.

Compared to the prior art, the technical solution not only addresses the issue of laborious operation, but also improves the overall performance and reliability of the drive mechanism.

In some embodiments, a clamping groove 5.2 is arranged on the inclined or curved surface of the active latch plate 5. When the end of the inner pivot arm 9.3 is pressed against the clamping groove 5.2, the fastening heads 5.3 of the active latch plate 5 and the driven latch plate 6 are fully retracted into the housing 4.

In some embodiments, the design of the clamping groove 5.2 can be implemented in various ways. For example, the clamping groove 5.2 can be a recessed arc-shaped groove, and a depth and shape of the clamping groove 5.2 correspond to the end of the inner pivot arm 9.3.

In some preferred embodiments, the depth of the clamping groove 5.2 can be slightly greater than the thickness of the end of the inner pivot arm 9.3, thereby providing a certain clearance when pressed against to avoid excessive friction. Additionally, an edge of the clamping groove 5.2 is configured as a smooth transition to reduce resistance during the sliding process of the inner pivot arm 9.3. A position of the clamping groove 5.2 is arranged at the middle or near the end of the inclined surface or curved surface of the active latch plate 5. The specific position is adjusted according to operational requirements in practical applications.

In this case, by adopting the design of the clamping groove 5.2, this technical solution enables the end of the inner pivot arm 9.3 to be accurately pressed into the clamping groove 5.2, thereby ensuring that the fastening heads 5.3 of the active latch plate 5 and the driven latch plate 6 can be fully retracted into the housing 4. On one hand, this technical solution provides tactile and auditory feedback to the user when the end of the inner pivot arm 9.3 is pressed into the clamping groove 5.2, indicating that the adjustment is completed. On the other hand, the depth of the clamping groove 5.2 is sufficient to achieve locking in the aforementioned state, thereby allowing the step-by-step operation of unlocking and removing the quick-release device.

Compared to the prior art, the technical solution not only improves operational convenience and tactile feedback, but also enhances the stability and reliability of the device through the locking function of the clamping groove 5.2, effectively addressing the issues of laborious operation and poor tactile feedback found in existing technologies.

Referring to Fig.7 and Fig. 10, the housing 4 includes a base 4.1 and a cover plate 4.2 overlaying the base 4.1, and the plurality of through holes 4.5 are arranged on the base 4.1. An edge of each of the base 4.1 and the cover plate 4.2 is provided with an arc-shaped groove. When the base 4.1 and the cover plate 4.2 are assembled, the arc-shaped groove of the base 4.1 is configured to be butt-jointed with the arc-shaped groove of the cover plate 4.2 to form a hinge seat. The rotation shaft 9.1 of the operating component 9 is insertedly provided in the hinge seat, and is configured to be rotatable about an axis of the hinge seat.

In this case, when assembling, the base 4.1 is configured to be butt-jointed with the cover plate 4.2 via the arc-shaped groove to form the stable hinge seat. A shape and size of the hinge seat are adjusted according to requirements of the rotation shaft 9.1 to ensure the rotation shaft 9.1 to be smoothly and insertedly provided in the hinge seat, thereby allowing the rotation shaft 9.1 to rotate. For example, a depth and width of the arc-shaped groove are adapted to a diameter of the rotation shaft 9.1 to reduce the friction and wear during rotating process. Moreover, the arc-shaped groove is made of material with highly abrasive resistance to extend the service life of the hinge seat.

In some embodiments, the base 4.1 is configured to be butt-jointed with the cover plate 4.2 via the arc-shaped groove to form the hinge seat, providing a mounting position for the rotation shaft 9.1 of the operating component 9. The rotation shaft 9.1 is insertedly provided in the hinge seat, thereby allowing the rotation shaft 9.1 to stably and reliably rotate. This design simplifies the mounting process of the rotation shaft 9.1, simultaneously enhancing the durability and operational efficiency of the overall drive mechanism. For example, when the operating component 9 rotates, the hinge seat effectively limits axial and radial movement of the rotation shaft 9.1, thereby avoiding drive mechanism failure caused by loosening or misalignment of the rotation shaft 9.1. Compared to the prior art, the technical solution of the present disclosure significantly improves the assembly and rotation stability of the rotation shaft 9.1 of the operating component 9 via the hinge seat formed by the arc-shaped groove of the base 4.1 butt-jointing with the arc-shaped groove of the cover plate 4.2. In the prior art, the rotation shaft 9.1 of the operating component 9 is typically mounted on the side wall of the housing 4, making it susceptible to loosening or misalignment due to mounting tolerances or long-term use, thereby affecting the reliability and operational efficiency of the drive mechanism. In contrast, the technical solution of the present disclosure not only simplifies the mounting process of the rotation shaft 9.1, but also enhances the stability of the rotation shaft 9.1 during rotating process by adopting the design of the hinge seat, thereby improving the overall durability and operational efficiency of the drive mechanism.

Referring to Figs. 1-3 and Figs. 12-16, the base plate 2 is slidably arranged on an upper end surface of the quick-release main body 1. A positioning slide groove 12 is arranged on one of an upper end surface of the quick-release main body 1 and a lower end surface of the base plate 2, and the positioning slide groove 12 is configured to extend along a sliding direction of the base plate 2. A positioning assembly is arranged on the other of an upper end surface of the quick-release main body 1 and a lower end surface of the base plate 2. A plurality of positioning notches 12.1 are arranged spaced apart within the positioning slide groove 12 along the sliding direction. The positioning assembly includes a toothed engagement portion 13.1, where the toothed engagement portion 13.1 is configured to selectively engage with or exit from the plurality of positioning notches 12.1. When the toothed engagement portion 13.1 engages with any one of the plurality of positioning notches 12.1, a position of the base plate 2 relative to the quick-release main body 1 is locked. When the toothed engagement portion 13.1 exits from the plurality of positioning notches 12.1, the base plate 2 is configured to be slidably adjusted relative to the quick-release main body 1.

In this case, the extending direction of the positioning slide groove 12 is consistent with the sliding direction of the base plate 2 to ensure the base plate 2 to stably slide. Interval arrangement of the plurality of positioning notches 12.1 provides a plurality of fixed positions to allow the base plate 2 to be locked at different positions. The toothed engagement portion 13.1 selectively engages with or exits from the plurality of positioning notches 12.1 through manual or mechanical drive.

In some embodiments, the toothed engagement portion 13.1 is driven to move by pulling the operating component 9 or pressing a button.

In some preferred embodiments, the toothed engagement portion 13.1 is configured as an elastically-returning structure, which automatically resets through an elastic force of the second return spring 13.2, thereby simplifying operational steps.

In some embodiments, configurations of the positioning slide groove 12 and the positioning assembly are adjusted according to practical requirements. For example, if the positioning slide groove 12 is arranged on a lower end surface of the base plate 2, the positioning assembly is arranged on an upper end surface of the quick-release main body 1; if the positioning slide groove 12 is arranged on an upper end surface of the quick-release main body 1, the positioning assembly is arranged on a lower end surface of the base plate 2. This flexible design enables the structure to adapt to the quick-release device of various types of motorcycle tank bags. Consequently, this technical solution achieves the sliding adjustment and position locking of the base plate 2 through the cooperation of the positioning slide groove 12 and the positioning assembly.

Compared to the prior art, this structure simplifies the operational steps, reduces sliding resistance, and improves the locking stability. In other words, through the cooperation between the toothed engagement portion 13.1 and the positioning notches 12.1, the base plate 2 can slide smoothly without requiring significant external force. Concurrently, the interval arrangement of the plurality of positioning notches 12.1 provides the plurality of fixed positions to allow the base plate 2 not to loosen or shake under a locked state, and to maintain stability even on bumpy roads. The technical solution of the present disclosure effectively addresses the technical problems in the prior art of cumbersome operation, uneven sliding resistance, and insufficient fixation stability during the sliding adjustment of the quick-release device of motorcycle tank bag, thereby enhancing the user experience.

According to embodiments in Figs. 1-2, the base plate 2 is provided with a sliding rail hole 15 penetrating through the upper and lower end surfaces of the base plate 2. A sliding block 16 is configured to be fixedly connected to the upper end surface of the quick-release main body 1. A lower end of the sliding block 16 is configured to pass through the sliding rail hole 15 and be fixedly connected to the quick-release main body 1. The sliding block 16 is configured to slidably engage with the sliding rail hole 15 to guide the sliding direction of the base plate 2. The design of the sliding rail hole 15 allows the sliding block 16 to slide smoothly inside the sliding rail hole 15, ensuring the directional stability of the base plate 2 during adjustment. The fixed connection of the sliding block 16 is achieved through bolts, welding, or other mechanical connection methods to ensure a secure connection with the quick-release main body 1. The shape of the sliding rail hole 15 can be linear to be adapted to different sliding requirements.

The material of the sliding block 16 is wear-resistant and impact-resistant metals or plastics to enhance service life and reliability of the sliding block 16. Through the cooperation between the sliding rail hole 15 and the sliding block 16, the issue of unstable guidance of the sliding direction of the base plate 2 is solved. The sliding rail hole 15 penetrates through the upper and lower end surfaces of the base plate 2. The sliding block 16 is fixedly connected to the upper end surface of the quick-release main body 1 by passing through the sliding rail hole 15. The sliding cooperation between the sliding block 16 and the sliding rail hole 15 ensures the directional stability of the base plate 2 during the sliding process, thereby preventing deviation or jamming during the sliding process. Simultaneously, based on the cooperation between the sliding block 16 and the sliding rail hole 15, the quick-release main body 1 can not be separated from the base plate 2.

Compared to the prior art, the technical solution simplifies the operation steps, improves sliding smoothness, and enhances locking stability, thereby improving user experience.

In some preferred embodiments, the positioning assembly is arranged on the quick-release main body 1, and the positioning slide groove 12 is arranged on a lower end surface of the base plate 2. In other words, the positioning assembly is integrated to the quick-release main body 1 to simplify the structure of the base plate 2. In this case, the positioning assembly includes the toothed engagement portion 13.1, where the toothed engagement portion 13.1 is configured to selectively engage with or exit from the plurality of positioning notches 12.1 of the positioning slide groove 12. By arranging the positioning assembly on the quick-release main body 1, simultaneously arranging the positioning slide groove 12 on the upper end surface of the base plate 2, this design simplifies structures and reduces the component complexity.

In this case, the positioning assembly includes a moving block 13 arranged slidably and a second return spring 13.2, and the second return spring 13.2 is configured to elastically drive the moving block 13 to be returned. An inner end of the moving block 13 is provided with the toothed engagement portion 13.1, and an outer end of the moving block 13 is configured to extend to the base plate 2 or a side of the quick-release main body to serve as an actuation end. In this case, by slidably arranging the moving block 13, the user can easily push or pull the moving block 13 via the actuation end to control the engagement and exit of the toothed engagement portion 13.1. The second return spring 13.2 ensures the moving block 13 to automatically reset after operating, thereby improving the operation convenience and stability. The cooperation between the toothed engagement portion 13.1 and the positioning notch 12.1 further enhances the locking stability, and avoids the issue of loosening caused by machining tolerances or wear. Consequently, the present disclosure achieves convenient operation and locking stability of the positioning assembly through the cooperation between the toothed engagement portion 13.1 and the positioning notch 12.1.

Compared to the prior art, the present disclosure simplifies the operational steps, requiring only simple action on the actuation end to achieve both sliding adjustment and positional locking of the base plate 2, thereby addressing the issues of cumbersome operational procedures and insufficient locking stability in conventional structures. Furthermore, the optimized design of the toothed engagement portion 13.1 and the positioning notches 12.1 further enhances positioning accuracy and stability to ensure secure fastening of the motorcycle tank bag even on bumpy roads.

In some embodiments, an adjusting slide groove 13.3 is provided on the upper end surface of the quick-release main body 1, and a spring seat 13.4 is fixed in the adjusting slide groove 13.3. The moving block 13 is slidably embedded in the adjusting slide groove 13.3. A first end of the second return spring 13.2 is configured to abut against the spring seat 13.4, and a second end of the second return spring 13.2 is configured to abut against the moving block 13.

The design of the adjusting slide groove 13.3 enables precise guidance of the moving block 13 during the sliding process, preventing deviation or jamming of the moving block 13. The arrangement of the spring seat 13.4 ensures secure positioning of the second return spring 13.2. A first end of the second return spring 13.2 is configured to abut against the spring seat 13.4, and a second end of the second return spring 13.2 is configured to abut against the moving block 13, thereby enabling the moving block 13 to automatically reset after sliding. This design not only improves the sliding stability of the moving block 13, but also simplifies the assembly and fixation of the second return spring 13.2, thereby enhancing the overall reliability and operability of the sliding adjustment structure. Consequently, by arranging the adjusting slide groove 13.3 and the spring seat 13.4, the technical solution of the present disclosure addresses the issues of securing and guiding the second return spring 13.2 during the sliding movement of the moving block 13. Compared to the prior art, the technical solution not only simplifies the structure, but also improves the stability of the sliding adjustment and the convenience of operation, thereby significantly enhancing the user experience.

Referring to Figs. 12-16, the toothed engagement portion 13.1 includes a plurality of movable engagement teeth 13.5 arranged side by side, where the plurality of movable engagement teeth 13.5 are configured to synchronously engage with or exit from the plurality of the positioning notches 12.1. Through the aforementioned arrangement, the present disclosure not only addresses the issue of imprecise engagement between the movable engagement teeth 13.5 and the positioning notches 12.1, but also simultaneously allows the movable engagement teeth 13.5 to contact with the plurality of positioning notches 12.1, thereby improving the precision of the engagement between the movable engagement teeth 13.5 and each of the plurality of positioning notches 12.1. This design ensures the stability of the base plate 2 during sliding adjustment, avoiding instability issues caused by imprecise engagement between a single toothed engagement portion 13.1 and the notch. Through the synchronous action of the plurality of the movable engagement teeth 13.5, the present disclosure achieves a more precise and stable sliding adjustment.

Compared to the prior art, the present disclosure reduces the operational steps, improves the smoothness of sliding adjustment and the locking stability, and is particularly suitable for scenarios requiring frequent adjustments.

In some embodiments, a plurality of the fixed engagement teeth 12.2 are arranged side by side in the positioning slide groove 12, and spaces between any adjacent two among the plurality of fixed engagement teeth 12.2 are configured to form the plurality of positioning notches 12.1. A cross-section of each of the plurality of positioning notches 12.1 is configured to be flared, with a width increasing from inside to outside. A cross-section of the movable engagement tooth 13.5 is configured to be tapered, with a width decreased from a root end to an outer end. When the movable engagement tooth 13.5 fully engages with the plurality of positioning notches 12.1, the cross-section of the movable engagement tooth 13.5 is adapted to the cross-section of each of the plurality of positioning notches 12.1. In this case, the shape designs of the positioning notch 12.1 and the movable engagement tooth 13.5 are a key factor of the precise engagement.

The arrangement of the fixed engagement teeth 12.2 forms uniform intervals among the plurality of positioning notches 12.1, while the cross-section of each of the plurality of positioning notches 12.1 effectively guides the engagement of the movable engagement tooth 13.5. The cross-section of each of the plurality of movable engagement teeth 13.5 is configured to be tapered, with a decreased width from the root end to the outer end. This design allows the engagement teeth to gradually adapt to the cross-section of each of the plurality of positioning notches 12.1 during engaging process, ultimately achieving a perfect engagement. Consequently, through an adaptation between the cross-section of each of the plurality of fixed engagement teeth 12.2 and the cross-section of each of the plurality of movable engagement teeth 13.5, the technical solution ensures that the toothed engagement portion 13.1 and the positioning notches 12.1 are precisely guided into engaging and finally clamped tightly together, thereby reducing loosening.

In some embodiments, the cross-section of each of the plurality of movable engagement teeth 13.5 is fully adapted to the cross-section of each of the plurality of positioning notches 12.1, thereby enabling each of the plurality of engagement teeth to be tightly clamped after engaging and reducing loosening issues caused by shape mismatch.

Compared to the prior art, the present solution significantly improves the stability and precision of the sliding adjustment structure, effectively addressing the problems of imprecise engagement and susceptibility to loosening between the positioning notch 12.1 and the toothed engagement portion 13.1 in conventional sliding adjustment structures.

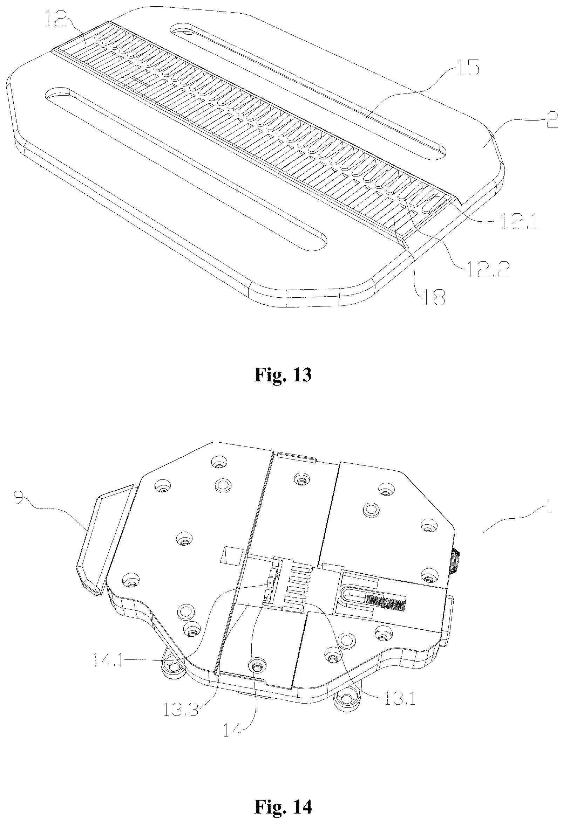

Referring to Fig. 12 and Fig. 14, a height of each of the plurality of fixed engagement teeth 12.2 is configured to be identical from a root end to an outer end, or decrease from the root end to the outer end. A height of the movable engagement tooth 13.5 is configured to be identical from the root end to the outer end, or decrease from the root end to the outer end. In this case, the height of each of the plurality of fixed engagement teeth 12.2 and the height of the movable engagement tooth 13.5 are crucial for resolving issues of unsmooth or unstable engagement during the engaging process.

In an embodiment, by maintaining a consistent height for both the fixed engagement tooth 12.2 and the movable engagement tooth 13.5 from the root end to the outer end, the contact area between the fixed engagement tooth 12.2 and the movable engagement tooth 13.5 during the engaging process is ensured to enhance the engaging and positioning effect.

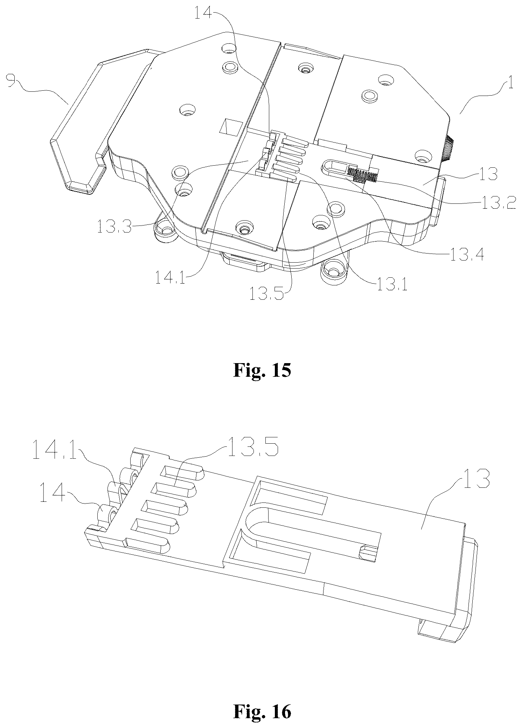

Referring to another embodiment in Fig. 13 and Fig. 15, by gradually decreasing the height of the fixed engagement tooth 12.2 and the movable engagement tooth 13.5 from the root end to the outer end, the displacement distance required for the moving block 13 during the exit of the toothed engagement portion 13.1 from the plurality of positioning notches 12.1 can be reduced. The aforementioned embodiment requires the movable engagement tooth 13.5 to fully exit from the plurality of positioning notches 12.1 before sliding. However, the embodiment provided herein only requires the moving block 13 to move until the combined height of the fixed engagement tooth 12.2 and the movable engagement tooth 13.5 is less than a height of the root end, thereby achieving sliding. Consequently, the present disclosure, by optimizing the height of the fixed engagement tooth 12.2 and the movable engagement tooth 13.5, effectively resolves the technical issues of unsmooth or unstable engagement caused by height variations during the engaging process.

Compared to the prior art, the technical solution of the present disclosure ensures engagement stability while simplifying the operational steps and improving adjustment efficiency, demonstrating significant practicality and innovativeness.

Referring to Figs. 12-15, a plurality of feedback grooves 18 are provided along an extending direction of the positioning slide groove 12, and the plurality of feedback grooves 18 are arranged in an extending direction of the plurality of positioning notches 12.1. An elastic feedback member is arranged on an inner end of the positioning assembly. When the base plate 2 slides, the elastic feedback member is configured to sequentially engage with and exit from the plurality of feedback grooves 18 to generate tactile or auditory feedback during the movement.

In some embodiments, the feedback grooves 18 is configured as a recessed or protruded structure on a side wall or a bottom of the positioning slide groove 12. The feedback groove 18 is configured to be rectangular, arc-shaped, and so on, facilitating to conjunction with the elastic feedback member.

In this case, by arranging the plurality of feedback grooves 18 in the positioning slide groove 12, and proving the elastic feedback member on an inner end of the positioning assembly, the tactile or auditory feedback can be generated during the sliding process of the base plate 2. The plurality of feedback grooves 18 are arranged in an extending direction of the positioning notches 12.1 to allow the elastic feedback member to sequentially engage with and exit from the plurality of feedback grooves 18, thereby generating a feedback signal. This design not only enhances the intuitiveness of user operation, but also improves the precision of sliding adjustment and the user experience.

Compared to the prior art, the technical solution simplifies the operational steps, reduces sliding resistance, and enhances locking stability, and effectively preventing deviation of the tank bag, particularly on bumpy roads.

In some embodiments, the elastic feedback member includes an elastic corrugated plate 14, and two ends of the elastic corrugated plate 14 are fixed to an inner end of the moving block 13. The elastic corrugated plate 14 is provided with at least one feedback protrusion 14.1 fitting to the plurality of feedback grooves 18. The elastic corrugated plate 14 is configured as an elastic member, and two ends of the elastic corrugated plate 14 are fixed to an inner end of the moving block 13 to ensure the elastic corrugated plate 14 to stably move with the moving block 13 during the sliding process. The adaptation of the feedback protrusion 14.1 and the feedback groove 18 allows the feedback protrusion 14.1 to sequentially engage with or exit from the plurality of feedback grooves 18 to generate the tactile or auditory feedback when the base plate 2 slides.

In some embodiments, the elastic corrugated plate 14 is made of metal or polymer material, and configured as a wave-shaped, zigzag-shaped, or any other structure capable of providing elasticity. The feedback protrusion 14.1 is configured as a hemispherical, conical, or any other shape capable of effectively adapting to the feedback grooves 18.

In some preferred embodiments, the elastic corrugated plate 14 is provided with a plurality of feedback protrusions 14.1 to increase the frequency and intensity of the feedback. Through the cooperation between the elastic corrugated plate 14 and the feedback protrusion 14.1, the present disclosure effectively addresses the lack of feedback during the sliding adjustment process, thereby enhancing the user experience.

In some embodiments, when the base plate 2 slides, the feedback protrusion 14.1 sequentially engages with and exits from the plurality of feedback grooves 18 to generate distinct tactile or auditory feedback, thereby allowing the user to clearly perceive the sliding process. This design not only improves operational intuitiveness, but also reduces the possibility of operational errors. Compared to the prior art, by introducing the elastic feedback member, the present disclosure significantly improves the smoothness and stability of the sliding adjustment, and enables users to perform positional adjustments more easily and accurately during use.

When using the aforementioned sliding adjustment structure, the user can press the actuation end of the moving block 13 with one hand to compress the second return spring 13.2 and cause the toothed engagement portion 13.1 to exit from the plurality of positioning notches 12.1 within the positioning slide groove 12. Simultaneously, the user can push or pull the tank bag with the other hand to adjust the position of the tank bag. During this process, the elastic feedback member sequentially engages with or exits from the plurality of feedback grooves 18, generating the tactile or auditory feedback during the movement of the elastic feedback member. Upon reaching an appropriate position, the user releases both hands to allow the second return spring 13.2 to automatically press the toothed engagement portion 13.1 into the positioning notch 12.1 within the positioning slide groove 12, thereby achieving secure positioning. As provided herein, the above solution enables adjustment without the requirement to detach the quick-release device or the tank bag mounted thereon, and the adjustment can be performed directly on the motorcycle. As documented in the background art, although existing patents achieves the sliding adjustment, these patents typically require detaching the tank bag from the quick-release device on the motorcycle before adjusting, resulting in cumbersome operation.

Although the disclosure has been described in detail above with reference to the embodiments, it should be understood that the embodiments disclosed herein are merely illustrative of the disclosure, and are not intended to limit the present disclosure. Various changes, modifications, replacements and variations can be made by those of ordinary skill in the art to the aforementioned embodiments, and those made without departing from the spirit of the disclosure shall fall within the scope of the present disclosure defined by the appended claims.

## Claims

1. A quick-release device for a motorcycle tank bag, comprising:
a quick-release main body (1);
a base plate (2); and
a tank cap mounting unit (3);
wherein the base plate (2) is configured to be connected to a tank bag, and mount the tank bag;
the tank cap mounting unit (3) is configured to be fixedly connected to an edge of a port of a motorcycle tank;
the tank cap mounting unit (3) is provided with a fastening hole;
the quick-release main body (1) comprises a housing (4), and a latch assembly arranged in the housing (4);
a bottom of the housing (4) is provided with a U-shaped groove (4.3) configured to mount the tank cap mounting unit (3), and a side wall of the U-shaped groove (4.3) is provided with a plurality of through holes (4.5);
the latch assembly comprises an active latch plate (5), a driven latch plate (6), an operating component (9) and at least one first return spring (8);
the active latch plate (5) and the driven latch plate (6) are slidably arranged in the housing (4); the operating component (9) is configured to drive the active latch plate (5) and the driven latch plate (6) to move; and the at least one first return spring (8) is configured to abut against the active latch plate (5) and/or the driven latch plate (6);
**characterized in that** an outer end of each of the active latch plate (5) and the driven latch plate (6) is provided with a fastening head (5.3); a synchronization gear (7) is rotatably arranged in the housing (4); and an inner end of each of the active latch plate (5) and the driven latch plate (6) is provided with a rack (5.4); the rack (5.4) is configured to engage with the synchronization gear (7), such that when the operating component (9) drives the active latch plate (5) to move, the synchronization gear (7) drives the driven latch plate (6) to move synchronously, and the fastening head (5.3) is driven to retract from or extend out of the plurality of through holes (4.5) to be clamped within the fastening hole to achieve locking;
the operating component (9) comprises a rotation shaft (9.1), an actuating lever (9.2) and an inner pivot arm (9.3); the rotation shaft (9.1) is rotatably arranged on the housing (4); the actuating lever (9.2) is arranged outside the housing (4); and the inner pivot arm (9.3) is arranged inside the housing (4);
in response to a case that an external force is applied to the actuating lever (9.2), the operating component (9) is configured to rotate about the rotation shaft (9.1), so as to directly or indirectly drive the active latch plate (5) and the driven latch plate (6) to move toward each other via the inner pivot arm (9.3), thereby causing the fastening head (5.3) to retract into the housing (4); and
in response to a case that the external force is removed, the at least one first return spring (8) is configured to offer an elastic force to drive the active latch plate (5) and the driven latch plate (6) to move away from each other, thereby causing the fastening head (5.3) to extend out of the housing (4) to be clamped within the fastening hole to achieve locking.

2. The quick-release device according to claim 1, **characterized in that** the U-shaped groove (4.3) is configured to recess inwardly on a lower end surface of the housing (4) such that a U-shaped boss (4.4) is formed inside the housing (4);
the plurality of through holes (4.5) are provided on a side wall of the U-shaped boss (4.4), and communicate with the U-shaped groove (4.3);
the synchronization gear (7) is rotatably arranged within an area enclosed by the U-shaped boss (4.4); and
the inner end of each of the active latch plate (5) and the driven latch plate (6) is configured to be at least partially arranged in the area enclosed by the U-shaped boss (4.4); and the rack (5.4) is configured to correspond to the synchronization gear (7), and the fastening head (5.3) is configured to correspond to the plurality of through holes (4.5).

3. The quick-release device according to claim 1, **characterized in that** the inner end of the driven latch plate (6) is configured as a U-shaped structure, and the rack (5.4) is provided on a first arm of the U-shaped structure;
the synchronization gear (7) is rotatably arranged in a U-shaped opening of the driven latch plate (6);
the inner end of the active latch plate (5) is configured as a bar-shaped plate, and the rack (5.4) is arranged on the bar-shaped plate;
the bar-shaped plate is insertedly provided within the U-shaped opening of the driven latch plate (6) such that the rack (5.4) of the active latch plate (5) engages with a first side of the synchronization gear (7), and the rack (5.4) of the driven latch plate (6) engages with a second side of the synchronization gear (7); and
a second arm of the U-shaped structure is configured to limit the bar-shaped plate in an engagement direction.

4. The quick-release device according to claim 1, **characterized in that** the housing (4) is provided with a locking assembly comprising a mechanical lock (11.1);
a locking plate (11.2) of the mechanical lock (11.1) is configured to enter a movement path of the active latch plate (5) or the driven latch plate (6);
in response to a case that the locking plate (11.2) enters the movement path, the locking plate (11.2) is configured to abut against the active latch plate (5) or the driven latch plate (6), thereby restricting movement of the active latch plate (5) or the driven latch plate (6);
in response to a case that the locking plate (11.2) is withdrawn from the movement path, the active latch plate (5) and the driven latch plate (6) are configured to freely move; and
a supporting plate (11.3) is arranged inside the housing (4); and in response to a case that the locking plate (11.2) is rotated to enter the movement path, the supporting plate (11.3) is configured to abut against a side of the locking plate (11.2) to enhance locking stability.

5. The quick-release device according to claim 1, **characterized in that** the outer end of the active latch plate (5) is configured as an inclined or curved surface, and the inclined or curved surface is provided with a clamping groove (5.2);
an end of the inner pivot arm (9.3) is configured as a curved plate, and an end of the curved plate is configured to press against the inclined or curved surface of the active latch plate (5); and
in response to a case that the end of the inner pivot arm (9.3) presses against the clamping groove (5.2), a tactile or auditory feedback is generated, and the fastening head (5.3) of the active latch plate (5) and the fastening head (5.3) of the driven latch plate (6) are configured to be fully retracted into the housing (4).

6. The quick-release device according to claim 1, **characterized in that** the housing (4) comprises a base (4.1) and a cover plate (4.2) overlying the base (4.1); and the plurality of through holes (4.5) are arranged on the base (4.1);
an edge of each of the base (4.1) and the cover plate (4.2) is provided with an arc-shaped groove; and in response to a case that the base (4.1) and the cover plate (4.2) are assembled, the arc-shaped groove of the base (4.1) is configured to be butt-jointed with the arc-shaped groove of the cover plate (4.2) to form a hinge seat; and
the rotation shaft (9.1) of the operating component (9) is insertedly provided in the hinge seat, and is configured to be rotatable about an axis of the hinge seat.

7. The quick-release device according to claim 1, **characterized in that** a positioning assembly is arranged on an upper end surface of the quick-release main body (1);
a positioning slide groove (12) is arranged on a lower end surface of the base plate (2), and is configured to extend along a sliding direction of the base plate (2);
a plurality of positioning notches (12.1) are arranged spaced apart within the positioning slide groove (12) along the sliding direction;
the positioning assembly comprises a toothed engagement portion (13.1), wherein the toothed engagement portion (13.1) is configured to selectively engage with or exit from the plurality of positioning notches (12.1);
in response to a case that the toothed engagement portion (13.1) engages with any one of the plurality of positioning notches (12.1), a position of the base plate (2) relative to the quick-release main body (1) is locked; and
in response to a case that the toothed engagement portion (13.1) exits from the plurality of positioning notches (12.1), the base plate (2) is configured to be slidably adjusted relative to the quick-release main body (1).

8. The quick-release device according to claim 7, **characterized in that** the positioning assembly comprises a moving block (13) arranged slidably and a second return spring (13.2); and the second return spring (13.2) is configured to elastically drive the moving block (13) to be returned;
an adjusting slide groove (13.3) is provided on the upper end surface of the quick-release main body (1), and a spring seat (13.4) is fixed in the adjusting slide groove (13.3);
the moving block (13) is slidably embedded in the adjusting slide groove (13.3); a first end of the second return spring (13.2) is configured to abut against the spring seat (13.4); and a second end of the second return spring (13.2) is configured to abut against the moving block (13); and
an inner end of the moving block (13) is provided with the toothed engagement portion (13.1), and an outer end of the moving block (13) is configured to extend to a side of the base plate (2) or a side of the quick-release main body (1) to serve as an actuation end.

9. The quick-release device according to claim 7 or 8, **characterized in that** a plurality of fixed engagement teeth (12.2) are arranged side by side in the positioning slide groove (12), and spaces between any adjacent two among the plurality of fixed engagement teeth (12.2) are configured to form the plurality of positioning notches (12.1);
a cross-section of each of the plurality of positioning notches (12.1) is configured to be flared, with a width increasing from inside to outside;
a cross-section of a movable engagement tooth (13.5) is configured to be tapered, with a width deceased from a root end to an outer end;
in response to a case that the movable engagement tooth (13.5) engages with the plurality of positioning notches (12.1), the cross-section of the movable engagement tooth (13.5) is adapted to the cross-section of each of the plurality of positioning notches (12.1); and
a height of each of the plurality of fixed engagement teeth (12.2) is configured to be identical from a root end to an outer end, or decrease from the root end to the outer end; and a height of the movable engagement tooth (13.5) is configured to be identical from the root end to the outer end, or decrease from the root end to the outer end.

10. The quick-release device according to claim 7, **characterized in that** a plurality of feedback grooves (18) are provided along an extending direction of the positioning slide groove (12), and the plurality of feedback grooves (18) are arranged in an extending direction of the plurality of positioning notches (12.1);
an elastic feedback member is arranged on an inner end of the positioning assembly, and comprises an elastic corrugated plate (14); two ends of the elastic corrugated plate (14) are fixed to an inner end of the moving block (13); and the elastic corrugated plate (14) is provided with at least one feedback protrusion (14.1) fitting the plurality of feedback grooves (18); and
in response to a case that the base plate (2) slides, the elastic feedback member is configured to sequentially engage with or exit from the plurality of feedback grooves (18) to generate a tactile or auditory feedback during movement.
